# EUROPÄISCHE PATENTSCHRIFT

(11) **EP 0 826 897 B1**
(45) Veröffentlichungstag und Bekanntmachung des Hinweises auf die Patenterteilung: **12.12.2001**
(21) Anmeldenummer: 97115177.4
(22) Anmeldetag: 02.09.1997
(51) Int. Cl.: F16D 69/04

(54) **Bremsbacke für Scheibenbremsen**
Brake pad for a disc brake
Plaquette de frein à disque

(30) Priorität: 03.09.1996 DE 29615283 U
(43) Veröffentlichungstag der Anmeldung: 04.03.1998
(73) Patentinhaber: TMD Friction GmbH, 51381 Leverkusen (DE)
(72) Erfinder: Röhling, Willmut, 53809 Ruppichteroth (DE); Helten, Herbert, 51766 Engelskirchen (DE); Herrmann, Helmut, 51371 Leverkusen (DE)
(74) Vertreter: von Kreisler, Alek, Dipl.-Chem.

(56) Entgegenhaltungen:
- DE-U- 1 952 317
- PATENT ABSTRACTS OF JAPAN vol. 017, no. 083 (M-1369), 18.Februar 1993 & JP 04 282035 A (AISIN SEIKI CO LTD), 7.Oktober 1992,
- PATENT ABSTRACTS OF JAPAN vol. 006, no. 036 (M-115), 5.März 1982 & JP 56 150632 A (NISSAN MOTOR CO LTD), 21.November 1981,

## Beschreibung

Die Neuerung betrifft eine Bremsbacke für Scheibenbremsen, bestehend aus einer einen Reibbelag tragenden Trägerplatte, mit einem oder mehreren Rückstellelementen, welche um einen bestimmten, von der Abnutzung des Reibbelages unabhängigen Abstand über die Reibfläche der Bremsbacke herausragen.

Es ist bekannt, daß sich Bremsbeläge nach dem Bremsvorgang nicht kontrolliert zurücksetzen. Die beiderseits der Bremsscheibe angeordneten Bremsbeläge schleifen auch ohne Druckbeaufschlagung eigentlich ständig an der Bremsscheibe, was zum einen zum erhöhten Verschleiß der Beläge führt und zum anderen den Fahrwiderstand und damit den Kraftstoffverbrauch erhöht. Nach jüngsten Untersuchungen führt das ständige Schleifen der Beläge in Verbindung mit sich taumelnd bewegenden Bremsscheiben zu Scheibenauswaschungen, was zu einem ungleichmäßigen Tragbild der Beläge führt, d.h. die Beläge wirken nicht mehr mit ihrer gesamten Fläche auf die Scheibe. Daraus resultieren ungleichmäßige Schwingungsanregungen, die zu unerwünschten Geräuschen führen. Zur Vermeidung dieser Nachteile ist bei Nichtbetätigung der Bremsen ein definiertes Lüftspiel zwischen Belag und Bremsscheibe von 0,1 bis 0,2 mm erforderlich, d.h. erwünscht.
Aus der DE1952317U ist ein Distanzelement bekannt, das zur Erreichung eines entsprechenden Lüftspiels einen pilzförmigen Schleifkörper in Kombination mit Federelementen zu Einsatz kommen läßt. Eine Feder wirkt auf das Distanzelement, so daß dieses um einen definierten Weg aus der Reibbelagkontaktfläche herausragt. Das pilzförmige Ende bewirkt über Hinterschneidungen, daß das Element nicht ganz herausgeschoben wird.
Diese Lösung hat den Nachteil, daß sehr viele Bauteile benötigt werden, was zum einen sehr hohe Kosten verursacht und zum anderen den Montageaufwand erhöht. Insbesondere die Anbringung der Abdeckplatte auf der reibbelagabgewandten Seite der Trägerplatte durch Verschweißen oder ähnliche Maßnahmen macht den Montagevorgang aufwendig. Der übliche Kraftverlust von Federn (Kriechneigung) , gerade unter Wärmebelastung, macht deren Verwendung problematisch. Schon nach kurzer Einsatzzeit muß mit nachlassenden Federkräften gerechnet werden. Auch mechanische Verkantungen der Feder sind möglich und können die Rückstellwirkung negativ beeinflussen. Des weiteren muß die Trägerplatte einer jeder Belagart entsprechend angepaßt werden, d.h. mit einer entsprechenden Aussparung versehen werden. Ein universaler Einsatz bei bestehenden Bremsbacken ist nicht möglich.
Da die Staubbelastung in der Bremse sehr hoch ist, besteht zudem die Gefahr, daß in den Spalt, zwischen Distanzelement und Reibbelagwandung der Ausnehmung, Staub eintritt und das Element blockiert.

Der Neuerung liegt somit die Aufgabe zugrunde, eine Bremsbacke für eine Scheibenbremse dahingehend zu verbessern, daß bei geringem Montageaufwand, mit wenigen zusätzlichen Bauelementen eine sichere Rückstellung der Bremsbacke im ungebremsten Zustand erreicht wird, wobei die Rückstellelemente eine hohe thermische Alterungsbeständigkeit aufweisen und Beläge aller Art jederzeit nachrüstbar sein sollen und der Rückstellmechanismus auch unter hohem Staubeinfluß funktionsfähig bleibt.

Die Aufgabe wird erfindungsgemäß dadurch gelöst, daß das Rückstellelement ein elastisches kompressibles Gleitelement ist, das in eine Ausnehmung des Reibbelages wirkungsflächenseitig eingesetzt ist.

Mit der Erfindung wird erreicht, daß die Rückstellelemente einteilig ausgeführt sind und die Teilevielfalt auf ein notwendiges Maß reduziert wird. Das Rückstellelement übernimmt die Funktion des Distanzelementes bzw. Abstandelementes wie auch der Feder. Als Reaktionsfläche wird der Grund der Ausnehmung genutzt, so daß Zusatzelemente gänzlich entfallen.
Da das Rückstellelement in eine einfache Ausnehmung im Reibmaterial eingebracht wird, kann jeder Belag unabhängig von der Bremsenkonstruktion und ohne Änderung der Trägerplatte nachgerüstet werden. Die Montage wird durch einfaches Einsetzen des Elementes sehr vereinfacht. Da das Rückstellelement in sich kompressibel ist, beeinflussen Stäube, die in Zwischenräume zum Reibmaterial dringen, die Funktion nicht. Der Federweg wird im Element erzeugt. Elastische kompressible Körper weisen aufgrund ihrer Zusammensetzung eine hohe thermische Alterungsbeständigkeit auf.

Vorzugsweise sieht die Erfindung weiterhin vor, daß die Ausnehmung im Reibbelag bis auf die Trägerplatte reicht und das in die Ausnehmung eingesetzte Rückstellelement auf der Trägerplatte aufgeklebt ist, womit eine axiale Befestigung gegeben ist. Die Klebung stellt eine Verliersicherung dar, die insbesondere bei der Vormontage zum tragen kommt. Außerdem werden damit Verschiebungen der Elemente im Betrieb vermieden.

Vorzugweise ist vorgesehen, daß das Rückstellelement streifenförmig ausgebildet ist, so daß über die breitere Abstützung eine gleichmäßiger Spalt gebildet wird.

Vorzugsweise ist vorgesehen, daß sich das Rückstellelement aus 5 bis 60 Gew.-% Phenolharz und 40 - 90 Gew.-% Gleitstoffen zusammensetzt, wobei das Phenolharz den Körper bzw. die Stoffe bindet und die thermische Stabilität beeinflußt und die Gleitstoffe das Abstandselement reibungsarm und verschleißfest machen.

Vorzugsweise ist vorgesehen, daß das Rückstellelement 1 bis 20 Gew.-% Fasern enthält, um die Festigkeit des Elementes zu erhöhen.

Vorzugsweise ist vorgesehen, daß im Rückstellelement 1 bis 50 Gew.-% Kautschuk enthalten sind, womit die gewünschte bzw. notwendige Elastizität eingestellt wird.

Ausführungsbeispiele der Erfindung werden nachfolgend anhand der Zeichnungen erläutert.

Es zeigen:
- Fig. 1: eine Bremsbacke mit Blick auf die Reibseite als erstes Ausführungsbeispiel
- Fig. 2: einen Schnitt durch zwei zu beiden Seiten einer Bremsscheibe angeordneten Bremsbacken
- Fig. 3: ein alternatives Ausführungsbeispiel einer Bremsbacke

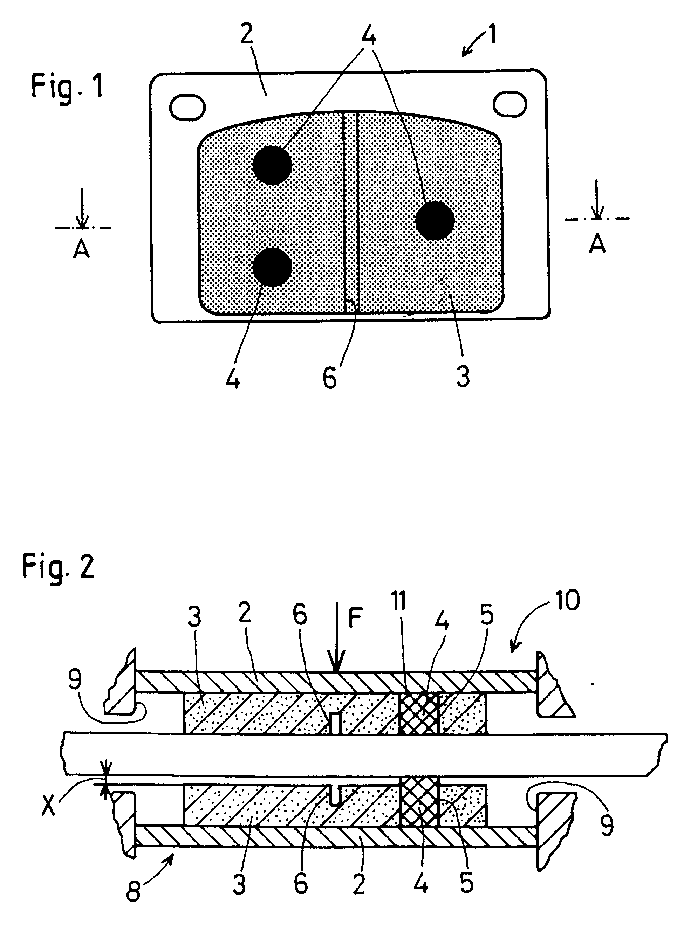

Die in Fig. 1 dargestellte Bremsbacke 1 besteht im einzelnen aus einer Trägerplatte 2, einem Reibbelag 3, sowie drei Rückstellelementen 4, die so angeordnet sind, daß eine Dreipunkt-Abstützung eine stabile Distanzbildung ermöglicht. Vorzugsweise werden 4 Rückstellelemente 4 verwendet Die Rückstellelemente 4 sind zylinderförmig, um in einfache Ausnehmungen 5 im Reibbelag 3 eingesetzt werden zu können. Die Nut 6 ermöglicht das Ablaufen von Regen- und Spritzwasser im Bremsbetrieb.

In Fig.2 sind zwei Bremsbacken 1 , die zu beiden Seiten einer Bremsscheibe 7 angeordnet sind im Schnitt zur Fig. .1 aus der Richtung A dargestellt. Die untere Bremsbacke 8 ist im gelösten Zustand. Das Rückstellelement schiebt die Bremsbacke 8 um das Maß X, das vorzugsweise 0,1 bis 1 mm beträgt, von der Bremsscheibe weg, so daß sich der gewünschte Lüftspalt einstellt. Dabei muß das federnde Rückstellelement 4 die Reibungskräfte im Bremsbackenaufnahmeschacht 9 überwinden.
Der obere Bremsbacken 10 wird durch die Kraft F an die Bremsscheibe 7 gepreßt, d.h. in den Bremszustand gebracht, wobei das elastische kompressible Rückstellelement um den Federweg X in die Ausnehmung 5, die in diesem Fall eine Bohrung ist, zurückgedrückt wird. Die Ausnehmung 5 reicht bis zur Trägerplatte 2 .
Das Rückstellelement ist mit Spiel in die Ausnehmung 5 eingesetzt, um besser montierbar zu sein und ist am Boden der Ausnehmung 11 festgeklebt, so daß das Rückstellelement 4 bei der Vormontage verliersicher befestigt ist und axiales Verrutschen des Elementes 4 im Betrieb verhindert wird. Alternativ kann die Ausnehmung 5 zur Trägerplatte 2 hin verjüngend ausgeführt sein, so daß das untere Ende des Rückstellelementes 4 eingepreßt wird, d.h. mittels einer Preßpassung gehalten wird.
Das Phenolharz , das Bestandteil des Rückstellelements ist, wird in geschäumter Form verarbeitet, wodurch der abgebundene Körper aufgrund der entstehenden Hohlräume elastisch und kompressibel wird. Dabei können modifizierte wie nicht modifizierte Phenolharze zu Einsatz kommen. Die Elastizität wie auch Kompressiblität ließe sich ebenso mit künstlichen Hohlräumen realisieren, wie zum Beispiel Bohrungen o.ä.. Unterstützt wird die Elastizität durch die Hinzugabe von Kautschuk. Die weiterhin enthaltenen Gleitstoffe, wie z.B. Sulfide wie Molybdänsulfid, Antimotrisulfid, Zinnssulfid, Graphite, Silikate u.ä verringern den Reibwert , so daß die Reibung an der Bremsscheibe 7 auf ein Minimum reduziert wird und erhöhen die Verschleißfestigkeit des Rückstellelementes 4.

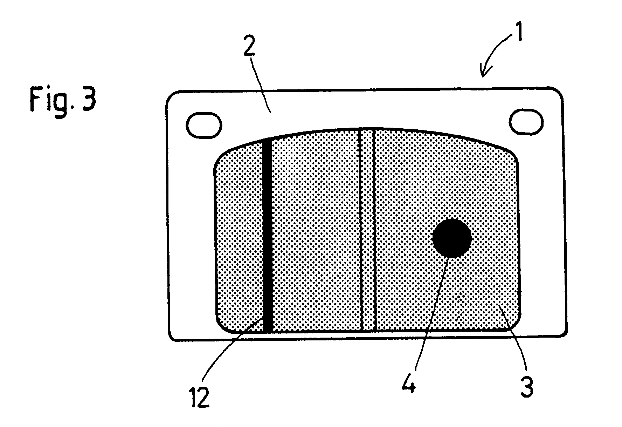

Die in Fig. 3 dargestellte Bremsbacke 1 zeigt die Kombination eines zylindrischen Rückstellelementes 4 mit einem streifenförmigen Element 12. Derartige streifenförmige Rückstellelemente können bezüglich der Bremsscheibendrehrichtung einlaufseitig wie auch auslaufseitig angeordnet sein oder beidseitig. Die Ausrichtung ist auch tangential zur Bremsscheibe möglich, gegebenfalls radial wie tangential sich im Zentrum des Reibbelages 3 kreuzend.

## Patentansprüche

1. Bremsbacke für Scheibenbremsen, bestehend aus einer einen Reibbelag (3) tragenden Trägerplatte (2), mit einem oder mehreren Rückstellelementen (4), welche um einen bestimmten von der Abnutzung des Reibbelages (3) unabhängigen Abstand (X) über die Reibfläche der Bremsbacke (1) herausragen **dadurch gekennzeichnet, daß** das Rückstellelement (4) ein elastisches kompressibles Gleitelement ist, das in eine Ausnehmung (5) des Reibbelages (1) wirkungflächenseitig eingesetzt ist.

2. Bremsbacke nach Anspruch 1 **dadurch gekennzeichnet, daß** die Ausnehmung (5) im Reibbelag (3) bis auf die Trägerplatte (2) reicht und das Rückstellelement (4) in der Ausnehmung (5) auf der Trägerplatte (2) aufgeklebt ist.

3. Bremsbacke nach Anspruch 1 oder 2 **dadurch gekennzeichnet, daß** das Rückstellelement (4) streifenförmig ausgebildet ist.

4. Bremsbacke einem der Ansprüche 1 bis 3 **dadurch gekennzeichnet, daß** sich das Rückstellelement (4) aus 5 - 60 Gew.-% Phenolharz und 40 - 90 Gew-% Gleitstoffe zusammensetzt.

5. Bremsbacke nach Anspruch 4 **dadurch gekennzeichnet, daß** im Rückstellelement (4)1 - 20 Gew-% Fasern enthalten sind.

6. Bremsbacke nach Anspruch 4 oder 5 **dadurch gekennzeichnet, daß** im Rückstellelement (4) 1- 50 Gew.-% Kautschuk enthalten ist.

## Claims

1. Brake pad for disc brakes, consisting of a base plate (2) supporting a friction lining (3), with one or more resetting elements (4), which project, irrespective of the amount of wear of the friction lining (3), by a distance (X) beyond the friction surface of the brake pad (1), **characterised in that**, the resetting element (4) is an elastically compressible sliding element, that is inserted on the active surface side in a recess (5) of the friction lining (1).

2. Brake pad according to Claim 1, **characterised in that**, the recess (5) in the friction lining (3) extends to the base plate (2) and the resetting element (4) is stuck in the recess (5) on the base plate (2).

3. Brake pad according to Claim 1 or 2, **characterised in that**, the resetting element (4) is of a stripe-shaped design.

4. Brake pad according to Claims 1 to 3, **characterised in that** the resetting element (4) consists 5 to 60 % by weight of phenolic resin and 40 - 90 % by weight of sliding materials.

5. Brake pad according to Claim 4, **characterised in that**, the resetting element (4) contains 1 to 20 % by weight fibres.

6. Brake pad according to Claim 4 or 5, **characterised in that**, the resetting element (4) contains 1 to 50 % by weight rubber.

## Revendications

1. Patin de frein pour freins à disque, composée d'une plaque de support (2) portant une garniture de friction (3), avec un ou plusieurs éléments de reculement (4) qui dépassent d'une certaine distance (X), indépendante de l'usure de la garniture de friction (3), au-delà de la surface de friction de la patin de frein (1), **caractérisée en ce que** l'élément de reculement (4) est un élément glissant, élastique, compressible qui est placé dans un creux (5) de la garniture de friction (1) côté surface de réponse.

2. Patin de frein selon la revendication 1, **caractérisée en ce que** le creux (5) dans la garniture de friction (3) va jusqu'à la plaque de support (2) et que l'élément de reculement (4) placé dans le creux (5) est collé sur la plaque de support (2).

3. Patin de frein selon les revendications 1 ou 2, **caractérisée en ce que** l'élément de reculement (4) est en forme de bandes.

4. Patin de frein selon les revendications 1 à 3, **caractérisée en ce que** l'élément de reculement (4) est composé de 5 à 60% en poids, de résine phénolique et de 40 à 90% en poids, de lubrifiants.

5. Patin de frein selon la revendication 4, **caractérisée en ce que** l'élément de reculement (4) contient 1 à 20% en poids de fibres.

6. Patin de frein selon les revendications 4 ou 5, **caractérisée en ce que** l'élément de reculement (4) contient 1 à 50% en poids de caoutchouc.
